# EUROPÄISCHE PATENTSCHRIFT

(11) **EP 1 897 748 B1**
(45) Veröffentlichungstag und Bekanntmachung des Hinweises auf die Patenterteilung: **10.11.2010**
(21) Anmeldenummer: 07114171.7
(22) Anmeldetag: 10.08.2007
(51) Int. Cl.: B60N 3/10

(54) **Vorrichtungen mit Haltebacken zum Halten von Getränkedosen**
Devices with retaining jaws for holding beverage cans
Dispositifs avec mâchoires de fixation pour la fixation de boîtes de boissons

(30) Priorität: 09.09.2006 DE 202006013840 U
(43) Veröffentlichungstag der Anmeldung: 12.03.2008
(73) Patentinhaber: Dr. Schneider Kunststoffwerke GmbH, 96317 Kronach (DE)
(72) Erfinder: Trinkwalter, Bernd, 96328 Tüschnitz (DE)
(74) Vertreter: Kinnstätter, Klaus

(56) Entgegenhaltungen:
- DE-C2- 19 729 689
- US-A1- 2005 205 590

## Beschreibung

Die Erfindung betrifft eine Vorrichtung mit Haltebacken zum Halten von Getränkedosen, Trinkflaschen oder dergleichen Behältnissen in einem Kraftfahrzeug oder in einer Trägerplatte mit den im Oberbegriff des Anspruchs 1 angegebenen Merkmalen.

Aus der DE 197 29 689 C2 ist eine gattungsgemäße Vorrichtung in Form eines Halters für einen Getränkebehälter mit einer nach oben offenen Behälteraufnahme für den Getränkebehälter und mit mindestens einer in die Behälteraufnahme einschwenkbaren Haltebacke bekannt. Jede Haltebacke ist jeweils von einem an einem Halteelement abgestützten Federmittel nach oben beaufschlagt und jeweils um einen Lagerbolzen nach unten in die Behälteraufnahme verschwenkbar und ragt in das Innere des Behälters hinein. Beim Einstellen einer Dose legen sich die Stützflächen der Backen an die Gehäusewand der Dose an.

Aus der DE 299 20 019 U1 ist eine Vorrichtung zum Halten von Getränkedosen oder dergleichen Behältern, insbesondere zum Einbau in Kraftfahrzeuge, bestehend aus einem annähernd zylindrischen, topfähnlichen Gehäuse mit einem Boden zum Aufstellen des Behälters und vorzugsweise angeordneten, radialen Haltemitteln zum Halten eines eingestellten Behälters, bekannt. Das Gehäuse ist vornehmlich mit seiner Mündung bündig in eine entsprechend geformte Einbauöffnung einsetzbar. Der Boden ist aus einer Nichtgebrauchslage, in der er bündig mit der Mündung des Gehäuses abschließt oder gering hinter der Mündung zurückliegt oder gering mit der Mündung vorragt, in eine Gebrauchslage entlang der Mittelachse des Gehäuses verschiebbar, in der er den Boden des topfartigen Gehäuses bildet. Die radialen Haltemittel sind durch gleichmäßig auf dem Gehäuseumfang verteilt angeordnete Schwenkhebel gebildet, die an dem rückwärtigen Ende des Gehäuses angelenkt sind. Sie weisen an ihren freien Enden vorzugsweise federnde Haltevorsprünge in Form von Backen auf. Die Haltemittel sind mittels des in Gebrauchslage verschobenen Bodens entgegen der Kraft von Rückstellfedern aus der Lage, in der die Haltevorsprünge nicht in den Gehäuseinnenraum vorragen, in die Gebrauchslage verschwenkbar, in der mindestens die Haltevorsprünge radial in das Gehäuseinnere hineinragen. Vorzugsweise sind die Haltevorsprünge an den freien Enden der Schwenkhebel begrenzt gegen die Federkraft schwenkbeweglich angelegt, um eine Anpassung an unterschiedliche Behälterdurchmesser zu ermöglichen, die in das Gehäuse hineingestellt werden.

Haltebacken, die federbelastet in den Innenraum eines Aufnahmekörpers für Trinkgefäße hineinragen, sind ferner aus der DE 100 43 720 A1, der DE 195 46 126 A1, der US 5,782,448 A, der DE 201 08 250 U1 und aus der DE 296 06 583 U1 bekannt.

Aus der US 2005/0205590 A1 ist eine Vorrichtung bekannt, bei der eine einzige Haltebacke zur Anpassung an Behältnissen unterschiedlicher Durchmesser schwenkbeweglich und gegen die Kraft einer Feder verschwenkbar an zwei seitlichen Hebelarmen befestigt, die schwenkbeweglich an der Deckwand des Aufnahmekörpers untenseitig gelagert sind und von einer Feder nach oben gedrückt werden, so dass die Haltebacke einen Teil der Öffnung des Aufnahmekörpers verschließt und von einem eingesetzten Behältnis nach unten gegen die Kraft der Federn verschwenkt.

Allen bekannten Ausführungsformen von Vorrichtungen mit Haltebacken haftet der Nachteil an, dass der maximale Schwenkbereich der Haltebacken dem doppelten Schwenkradius der Haltebacken entspricht und damit nur Dosen oder Getränkegefäße mit Durchmessern gesichert gehalten sind, die in dem von den Haltebacken erfassten Bereich liegen.

Der Erfindung liegt deshalb die Aufgabe zu Grunde, die Haltebacken derart auszubilden, dass Behältnisse mit einem größeren Durchmesserbereich bzw. einer wesentlich größeren Dimensionierungstoleranz bei polygonaler Ausbildung und bei runder Ausbildung in den Aufnahmekörper einsetzbar sind und dort gesichert gehalten werden.

Die Aufgabe löst die Erfindung durch Ausgestaltung der Haltebacken gemäß der Lehre im Anspruch 1.

Durch die Kaskade zweier Halteelemente, nämlich der Haltebacke einerseits und des federbelasteten Ansatzes andererseits gemäß der Lehre des Anspruches 1, ist ersichtlich, dass wesentlich größere und auch wesentlich kleinere Dosen, Behältnisse oder andere Trinkgefäße in den Aufnahmekörper einsetzbar sind und dennoch gesichert gehalten werden. Die die Haltebacke überstehende Länge des Halteansatzes und die Tiefe der Haltebacke bestimmen im Wesentlichen den Bereich des Einsatzes. Der Halteansatz kann sowohl seitlich an einer Haltebacke befestigt oder in eine Haltebacke eingesetzt sein, wenn diese einen Hohlraum aufweist oder aus zwei Seitenwänden gebildet ist. Der Halteansatz kann verschwenkbar angebracht oder aber auch in die Haltebacke hinein oder relativ dieser gegenüber verschiebbar ausgeführt oder an dieser seitlich entlang geführt sein. In jedem Fall wird beim Einsetzen des Behältnisses zunächst der Halteansatz verschwenkt oder verschoben. Es ist dabei angebracht, entweder eine Feder so zu dimensionieren und anzubringen, dass zunächst der Halteansatz verschwenkt oder verschoben wird, oder aber zwei getrennte Federanordnungen mit unterschiedlicher Federkraftsausübung, damit zunächst der Halteansatz verschwenkt oder eingeschoben wird, bevor beim Einsetzen von Behältnissen mit relativ großem Durchmesser bzw. Umfang die Haltebacken gegen die Kraft der auf sie wirkenden Federn verschwenkt werden, um das Behältnis einzuklemmen. Die erfindungsgemäße Anordnung hat ferner den Vorteil, dass bei Behältnissen im bestimmten Durchmesserbereich sowohl die Haltebacken anliegen als auch die verschwenkbaren oder verschiebbaren Halteansätze, wodurch ein doppelter Sicherungseffekt gegeben ist.

Im Falle, dass die Haltebacken aus zwei Seitenwänden bestehen, die obenseitig miteinander verbunden sind, kann der Halteansatz zwischen den beiden Seitenwänden gelagert sein. Bei Anbringung einer Schwenkachse, die parallel zur Schwenkachse der Haltebacke verläuft, wird der Halteansatz wie bei einem Taschenmesser praktisch in das Innere der Haltebacke hineingeschwenkt, was vom Durchmesser des Behältnisses abhängig ist. Dies kann dazu führen, dass bei besonders großem Durchmesser des Behältnisses dieses sowohl von einem Teilbereich der Oberfläche des Halteansatzes als auch von Anlageflächen der Haltebacke gesichert gehalten wird, die an der Mantelwand des Behältnisses anliegen. Auf einer Umfangsbahn können gleichmäßig verteilt drei oder mehrere Haltebacken mit Halteansätzen vorgesehen sein. Mindestens sind aber zwei vorzusehen, damit ein seitlicher Ausgleich und damit eine Zentrierung des Behältnisses in dem zylinderförmigen Aufnahmekörper erfolgt.

In weiterer Ausgestaltung ist vorgesehen, dass die Haltebacke obenseitig eine derartige Bogenform in Richtung des Behältnisses aufweist, dass die Oberfläche erst dann zur Anlage an der Mantelwand des Behältnisses gelangt, wenn der Halteansatz vollständig eingeschwenkt oder eingeschoben ist. Die Schwenkachsen der Haltebacken und der Halteansätze sind zweckmäßigerweise so gewählt, dass diese nachfolgend eine Schwenkbewegung der Elemente nach unten beim Einführen des Behältnisses in den Aufnahmekörper ermöglichen. Die Schwenkachse der Haltebacke kann untenseitig an dieser vorgesehen sein. Die Lager können außenseitig am Mantel des Aufnahmekörpers angebracht sein. In diesem Fall muss in der Mantelwand des Aufnahmekörpers ein Durchbruch vorgesehen sein, damit die Haltebacke nach innen frei schwenkbar ist. Ebenso ist hinter der Backe ein Hohlraum vorzusehen, damit diese über ihre gesamte Tiefe zurückgeschwenkt werden kann.

Anstelle eines Schwenklagers kann auch ein Schiebelager für den zusätzlichen Halteansatz vorgesehen sein. Hierbei hat es sich als vorteilhaft erwiesen, den Halteansatz mit seitlich vorstehenden Führungszapfen zu versehen, die mindestens beidseitig in an den oder in den Seitenwänden der Backen vorgesehenen oder eingearbeiteten Leitkurven verschiebbar eingesetzt sind. Auf den Halteansatz wird von der Rückseite her eine Feder aufgesetzt. Die Leitkurven können dabei Bogenabschnitte sein, die einen fiktiven Radius um eine fiktive Schwenkachse, beabstandet zur Schwenkachse der Backe, beschreiben, so dass nicht linear, sondern auf einer Bogenbahn der Halteansatz in die Haltebacke hineinschiebbar ist.

Die Erfindung wird nachfolgend anhand der in den Zeichnungen dargestellten Ausführungsbeispiele ergänzend erläutert.

In den Zeichnungen zeigen:
- FIG 1: eine Schnittzeichnung durch eine Vorrichtung zum Halten von Getränkedosen mit erfindungsgemäß vorgesehenen vier Haltebacken, von denen auf Grund der Schnittzeichnung nur drei sichtbar sind,
- FIG 2: eine Draufsicht auf eine Vorrichtung gemäß FIG 1 mit den vier Haltebacken und vier Halteansätzen,
- FIG 3: eine Rückansicht auf eine Haltebacke, wie sie in FIG 1 und FIG 2 eingesetzt ist, mit einem Halteansatz,
- FIG 4: eine Seitenansicht des Ausführungsbeispiels einer Haltebacke gemäß FIG 3,
- FIG 5: eine weitere Variante einer Haltebacke mit einem relativ gegenüber dieser verschiebbaren Halteansatz mit einer einzigen Feder und
- FIG 6: eine Seitenansicht des Ausführungsbeispiels gemäß FIG 5.

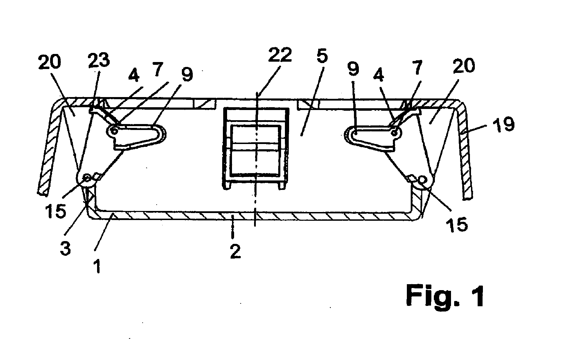

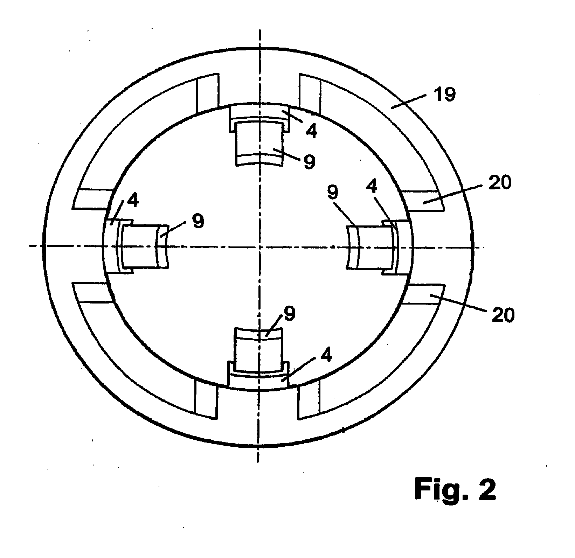

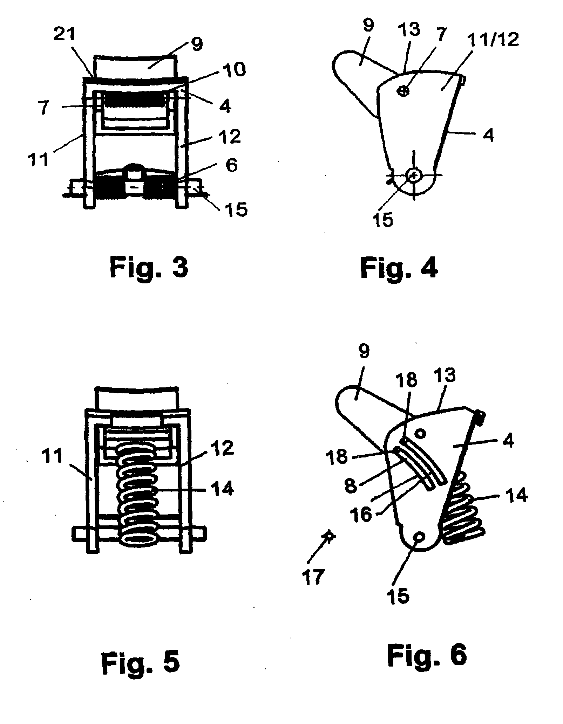

Das Ausführungsbeispiel in den Figuren 1 und 2 zeigt eine Vorrichtung zum Halten von Getränkedosen, Trinkflaschen oder dergleichen Behältnissen für den Einbau in ein Fahrzeug oder in eine Trägerplatte. Diese Vorrichtung besteht aus einem Aufnahmekörper 1, der eine Mantelwand 3 aufweist und einen Boden 2, der die Baugruppe zur Abstützung des aufzunehmenden Behälters bildet. Obenseitig ist eine Abdeckung 19 mit einer zentrischen, kreisrunden Öffnung vorgesehen, die dem Durchmesser des Aufnahmekörpers 1 entspricht. Auf einer Umfangsbahn verteilt sind jeweils Rippen 20 paarweise vorgesehen, die eine Öffnung in der Mantelwand 3 des Aufnahmekörpers 1 seitlich begrenzen. Die Rippen 20 bilden einen seitlichen Halt für die um die unteren Schwenkachsen 15 verschwenkbar gelagerten Haltebacken 4. Die Haltebacken 4 sind im Wesentlichen V-förmig ausgebildet und weisen eine gekrümmte Oberseite auf, wie aus den Figuren 4 und 6 ersichtlich ist. Sie sind darüber hinaus hohl ausgebildet und bestehen aus zwei Seitenwänden 11 und 12, wie aus Figuren 3 und 4 ersichtlich ist. Diese Seitenwände 11 und 12 sind obenseitig durch ein Brückenteil 21 miteinander verbunden, das die Schwenkbewegung des Halteansatzes nach oben begrenzt. Die Schwenkachse 15 wird durch eine Welle oder angespritzte Zapfen gebildet, die in Bohrungen in den Rippen 20 hineingesteckt werden.

Wie aus Figur 3 ersichtlich, ist um die die Achse bildende Welle eine Feder 6 gelegt, die eine Federkraft auf die Haltebacken in der Weise ausübt, dass diese in Richtung zur Mittenachse 22 der Vorrichtung schwenken. Der Schwenkweg wird durch einen obenseitig vorgesehenen Anschlag 23 begrenzt, der gegen einen Anschlag an der Unterseite der Abdeckung 19 greift. Es ist ersichtlich, dass gegen die Kraft der Feder 6 die Haltebacke 4 radial nach außen gedrückt werden kann. Der Verschwenkweg nach außen wird durch die im Wesentlichen senkrecht verlaufende Abdeckung 19 begrenzt.

Aus Figur 3 ist ersichtlich, dass um die Schwenkachse 7 ebenfalls eine Feder 10 gelegt ist, die einseitig abgestützt ist und auf den Halteansatz 9, der erfindungsgemäß in den Hohlraum der Haltebacke 4 einschwenkbar ist, eine Federkraft ausübt, um diesen Halteansatz nach oben zu verschwenken, was aus Figur 1 und Figur 4 ersichtlich ist. Wird nun in den Aufnahmekörper 1 ein Behältnis von oben eingeführt, so ist ersichtlich, dass je nach Durchmesser des Behältnisses zunächst die Halteansätze 9 nach unten in die Haltebacken 4 hinein verschwenkt werden. Sie bleiben mit der Oberseite stets in Eingriff mit der Mantelfläche des Behältnisses. Das Behältnis wird praktisch durch die vier auf der Umfangsbahn verteilt angeordneten Halteansätze 9 gehalten. Weist das Behältnis einen solchen Durchmesser auf, dass auch die lichte Weite zwischen den maximal in den Innenraum hineingeschwenkten Haltebacken nicht ausreicht, um das Behältnis zu halten, so werden automatisch die Haltebacken ebenfalls verschwenkt und kommen mit der Oberseite 13, die bogenförmig ausgebildet ist, in Eingriff mit der Oberfläche der Mantelwand des Behältnisses und klemmen dieses ein. Dabei kann das Behältnis mittels zweier Punkte, nämlich der Oberseite 13 und der Oberseite des Halteansatzes 9, festgeklemmt werden.

In den Figuren 5 und 6 ist eine Variante einer Haltebacke 4 mit Halteansatz 9 dargestellt. Der Halteansatz 9 ist als verschiebbares Teil ausgebildet und wird von einer Feder 14 hintergriffen, die sich an einem ortsfesten Lager abstützt, beispielsweise einem zwischen den Rippen 20 oder aber auch auf der die Schwenkachse 15 bildenden Welle angeordneten Lager. Der Halteansatz 9 weist an den Seiten vorstehende Führungszapfen 18 auf, die in bogenförmige, parallele Leitkurven 16 eingesetzt sind. Die Leitkurven 16 sind als Bogenabschnitte um eine fiktive Achse 17 angeordnet, so dass bei Auftreffen von Kraftkomponenten auf den Halteansatz 9 dieser, den bogenförmigen Leitkurven nach innen in den Hohlraum der Haltebacke 4 gegen die Kraft der Feder 14 folgend, hineingeschoben wird. Bei Einsatz eines Gefäßes mit besonders großem Durchmesser wird danach, wie beschrieben, auch die Haltebacke 4 nach rechts verschwenkt, bis das Gefäß vollständig gesichert in dem Aufnahmekörper gehalten wird.

### Bezugszeichenliste

- 1: Aufnahmekörper
- 2: Baugruppe
- 3: Mantelwand
- 4: Haltebacke
- 5: Innenraum
- 6: Feder
- 7: Schwenkachse
- 8: Lagerung
- 9: Halteansatz
- 10: Feder
- 11: Seitenwand
- 12: Seitenwand
- 13: Oberseite
- 14: Feder
- 15: Schwenkachse
- 16: Leitkurven
- 17: fiktive Achse
- 18: Führungszapfen
- 19: Abdeckung
- 20: Rippen
- 21: Brückenteil
- 22: Mittenachse
- 23: Anschlag

## Patentansprüche

1. Vorrichtung mit Haltebacken (4) zum Halten von Getränkedosen, Trinkflaschen oder dergleichen Behältnissen in einem Kraftfahrzeug oder in einer Trägerplatte, wobei die Vorrichtung einen Aufnahmekörper (1) und eine Baugruppe (2) zur Abstützung des aufzunehmenden Behältnisses in vertikaler Richtung aufweist und an der Mantelwand (3) des Aufnahmekörpers (1) die Haltebacken (4) innen- oder außenseitig an Halteeinrichtungen um eine obere oder untere Schwenkachse verschwenkbar angelenkt sind, derart, dass sie in den Innenraum (5) des Aufnahmekörpers (1) unter Wirkung einer Feder (6) vorstehen und sich an der Mantelfläche des Behältnisses, dieses einklemmend, abstützen, **dadurch gekennzeichnet, dass** jede Haltebacke (4) einen Halteansatz (9) aufweist, der eine Halteansatz (9) über mindestens eine an jeder Haltebacke (4) angeordneten Lagerung befestigbar ist und der mindestens eine Halteansatz (9) in Richtung der Längsachse des Aufnahmekörpers (1) gegen die Kraft einer Feder (6) verschwenk- oder verschiebbar ist, wobei die mindestens eine Lagerung derart ausgebildet ist, dass der Halteansatz (9) beim Einsetzen des Behältnisses in den Aufnahmekörper (1) gegen die Kraft einer Feder relativ gegenüber der Haltebacke (4) verschwenkbar oder verschiebbar ist und bei Behältnissen mit einem Durchmesser in einem bestimmten Durchmesser bereich jede Haltebacke (4) und der daran gelagerte Halteansatz (9) gemeinsam sich am eingesetzten Behältnis abstützen.

2. Vorrichtung nach Anspruch 1, **dadurch gekennzeichnet, dass** diese aus zwei Seitenwänden (11, 12) besteht und dass zwischen den Seitenwänden jeweils ein Halteansatz (9) gelagert ist.

3. Vorrichtung nach Anspruch 1 oder 2, **dadurch gekennzeichnet, dass** die Haltebacke (4) obenseitig eine derartige Bogenform in Richtung des Behältnisses aufweist, dass die Oberfläche (13) erst dann zur Anlage an der Mantelwand des Behältnisses gelangt, wenn der Halteansatz (9) vollständig eingeschwenkt oder eingeschoben ist.

4. Vorrichtung nach Anspruch 1, **dadurch gekennzeichnet, dass** der Halteansatz (9) und die Haltebacke(4) von Federn (6, 10) unterschiedlicher Federkraft ausgestellt sind, wobei die Federkraft der Feder (10) für den Halteansatz (9) geringer ist als die der Feder (6) für die Haltebacke (4).

5. Vorrichtung nach Anspruch 1, **dadurch gekennzeichnet, dass** eine einzige Feder (14) vorgesehen ist, die sich an einem Fixpunkt oder am Schwenklager (15) der Haltebacke (4) abstützt und gegen den Halteansatz (9) im Bereich der Haltebacke (4) drückt, wobei die Lagerung am Halteansatz (9) derart vorgesehen ist, dass ein Schieben oder ein Schwenken des Halteansatzes (9) relativ gegenüber der Haltebacke (4) möglich ist.

6. Vorrichtung nach Anspruch 1, **dadurch gekennzeichnet, dass** der Halteansatz (9) verschwenkbar gelagert ist und die Oberfläche im eingeschwenkten Zustand mit der Oberfläche der Haltebacke(4) eine Fixierung des Behältnisses bewirkt.

7. Vorrichtung nach Anspruch 1, **dadurch gekennzeichnet, dass** die Schwenkachse (15) der Haltebacke (4) untenseitig vorgesehen ist und die Schwenkachse des Ansatzes sich in der oberen Hälfte der Haltebacke (4) befindet.

8. Vorrichtung nach Anspruch 1, **dadurch gekennzeichnet, dass** der Halteansatz (9) seitlich vorstehende Führungszapfen (18) aufweist, die in mindestens beidseitig in den Seitenwänden (11, 12) der Haltebacke(4) vorgesehene oder eingearbeitete Leitkurven (16) verschiebbar eingesetzt sind.

9. Vorrichtung nach Anspruch 8, **dadurch gekennzeichnet, dass** die Leitkurven (16) Bogenabschnitte sind, die einen fiktiven Radius um eine fiktive Schwenkachse (17) beabstandet zur Schwenkachse (15) der Haltebacke (4) beschreiben.

10. Vorrichtung nach Anspruch 9, **dadurch gekennzeichnet, dass** parallel in den Seitenwänden zwei Leitkurven (16) angeordnet sind, in die jeweils ein Führungszapfen (18) an dem Halteansatz (9) eingreift.

11. Vorrichtung nach Anspruch 1, **dadurch gekennzeichnet, dass** die Tiefe der Haltebacke (4) und die Tiefe der Halteansätze derart dimensioniert sind, dass Behältnisse mit einem Durchmesser von ca. 50 mm bis ca. 85 mm einsetzbar sind.

12. Vorrichtung nach Anspruch 1, **dadurch gekennzeichnet, dass** einseitig an der Haltebacke (4) der Halteansatz (9) gelagert ist.

13. Vorrichtung nach einem der vorhergehenden Ansprüche, **dadurch gekennzeichnet, dass** der Aufnahmekörper (1) im Wesentlichen rund, eckig oder polygonal im Querschnitt ausgebildet ist und dass die Haltebacken (4) verteilt auf einer Umfangsbahn angeordnet sind und dass bei außenseitiger Anbringung der Haltebacken (4) in die Mantelwand Durchbrüche eingebracht sind, durch die die Haltebacken (4) in das Innere des Aufnahmekörpers (1) verschwenken.

14. Vorrichtung nach Anspruch 13, **dadurch gekennzeichnet, dass** bei kreisrunder Ausbildung des Querschnittes des Aufnahmekörpers (1) mindestens drei Haltebacken (4) verteilt auf einer Umfangsbahn des Mantels angebracht sind.

## Claims

1. Device with holding jaws (4) for holding beverage cans, drink bottles or like containers in a motor vehicle or in a support plate, wherein the device comprises a receiving body (1) and a subassembly (2) for support of the container, which is to be received, in vertical direction and, at the circumferential wall (3) of the receiving body (1), the holding jaws (4) are articulated at the inner or outer side to mounting devices to be so pivotable about an upper or lower pivot axis that they protrude into the interior space (5) of the receiving body (1) under the action of a spring (6) and are supported at the circumferential surface of the container to clamp this in place, **characterised in that** each holding jaw (4) has a holding projection (9), the holding projection (9) is attachable by way of at least one mount arranged at each holding jaw (4) and the at least one holding projection (9) is pivotable or displaceable in the direction of the longitudinal axis of the receiving body (1) against the force of the spring (6), wherein the at least one mount is so constructed that the holding projection (9) on insertion of the container into the receiving body (1) is pivotable or displaceable relative to the holding jaw (4) against the force of the spring and in the case of containers with a diameter in a defined diameter range each holding jaw (4) and the holding projection (9) mounted thereat are supported in common at the inserted container.

2. Device according to claim 1, **characterised in that** this consists of two side walls (11, 12) and a respective holding projection (9) is mounted between the side walls.

3. Device according to claim 1 or 2, **characterised in that** the holding jaw (4) has at the top such a curved shape in the direction of the container that the surface (13) comes into contact with the circumferential wall of the container only when the holding projection (9) is completely pivoted in or pushed in.

4. Device according to claim 1, **characterised in that** the holding projection (9) and the holding jaw (4) are acted on by springs (6, 10) of different spring force, wherein the spring force of the spring (10) for the holding projection (9) is smaller than that of the spring (6) for the holding jaw (4).

5. Device according to claim 1, **characterised in that** a single spring (14) is provided, which is supported at a fixed point or at the pivot bearing (15) of the holding jaw (4) and pressed against the holding projection (9) in the region of the holding jaw (4), wherein the mount is so provided at the holding projection (9) that pushing or pivoting of the holding projection (9) relative to the holding jaw (4) is possible.

6. Device according to claim 1, **characterised in that** the holding projection (9) is mounted to be pivotable and the surface in the pivoted-in state produces fixing of the container by the surface of the holding projection (4).

7. Device according to claim 1, **characterised in that** the pivot axis (15) of the holding jaw (4) is provided at the lower side and the pivot axis of the projection is disposed in the upper half of the holding jaw (4).

8. Device according to claim 1, **characterised in that** the holding projection (9) has laterally protruding guide pins (18) which are displaceably inserted into guide cams (16) provided or formed at least on both sides in the side walls (11, 12) of the holding jaw (4).

9. Device according to claim 8, **characterised in that** the guide cams (16) are curve sections describing a notional radius about a notional pivot axis (17) spaced from the pivot axis (15) of the holding jaw (4).

10. Device according to claim 9, **characterised in that** two guide cams (16), in each of which a respective guide pin (18) at the holding projection (9) engages, are arranged parallelly in the side walls.

11. Device according to claim 1, **characterised in that** the depth of the holding jaw (4) and the depth of the holding projections are so dimensioned that containers with a diameter of approximately 50 millimetres to approximately 85 millimetres are insertable.

12. Device according to claim 1, **characterised in that** the holding projection (9) is mounted on the holding jaw (4) at one side.

13. Device according to any one of the preceding claims, **characterised in that** the receiving body (1) is constructed to be substantially round, multi-cornered or polygonal in cross-section and that the holding jaws (4) are arranged in distribution on a circumferential track and that in the case of external mounting of the holding jaws (4) passages through which the holding jaws (4) pivot into the interior of the receiving body (1) are formed in the peripheral wall.

14. Device according to claim 13, **characterised in that** in the case of a circular construction of the cross-section of the receiving body (1) at least three holding jaws (4) are mounted in distribution on a circumferential track of the peripheral wall.

## Revendications

1. Dispositif avec mâchoires de maintien (4) pour la retenue de canettes de boissons, de bouteilles pour boissons ou autres récipients de ce genre dans un véhicule à moteur ou dans une plaque de support, en quoi le dispositif présente un corps récepteur (1) et un module (2) en vue de soutenir le récipient à recevoir dans le sens vertical et en quoi, au niveau de la paroi d'enveloppe (3) du corps récepteur (1), les mâchoires de maintien (4) sont articulées côté intérieur ou extérieur au niveau de dispositifs d'ancrage autour d'un axe de pivotement supérieur ou inférieur et sont orientables, de telle sorte qu'elles se trouvent en position avancée dans l'espace intérieur (5) du corps récepteur (1) sous l'effet d'un ressort (6) et s'appuient à la surface d'enveloppe, tandis qu'elles pincent le récipient, **caractérisé en ce que** chaque mâchoire de maintien (4) présente une pièce de maintien (9), **en ce que** la pièce de maintien (9) peut être fixée par au moins un palier installé sur chaque mâchoire de maintien (4) et **en ce que** la pièce de maintien (9) au nombre minimum de une peut être orientée ou déplacée dans le sens de l'axe longitudinal du corps récepteur (1) contre la force d'un ressort (6), en quoi le palier au nombre minimum de un doit être conçu de telle sorte que la pièce de maintien (9) peut être orientée ou déplacée contre la force d'un ressort relativement face à la mâchoire de maintien (4) lorsque le récipient est inséré dans le corps récepteur (1) et **en ce que**, pour des récipients avec un diamètre dans une plage de diamètres donnée, chaque mâchoire de maintien (4) et la pièce de maintien (9) qui y est logée s'appuient ensemble au récipient inséré.

2. Dispositif selon la revendication 1, **caractérisé en ce qu'**il est composé de deux parois latérales (11, 12) et **en ce que** respectivement une pièce de maintien (9) est logée entre les parois latérales.

3. Dispositif selon une des revendications 1 ou 2, **caractérisé en ce que** la mâchoire de maintien (4) présente en haut en direction du récipient une forme d'arcade telle que la surface (13) peut reposer sur la paroi d'enveloppe du récipient uniquement lorsque la pièce de maintien (9) est entièrement tournée ou insérée.

4. Dispositif selon la revendication 1, **caractérisé en ce que** la pièce de maintien (9) et la mâchoire de maintien (4) sont sorties par des ressorts (6, 10) de tension de ressort différente, en quoi la tension de ressort du ressort (10) pour la pièce de maintien (9) est inférieure à celle du ressort (6) pour la mâchoire de maintien (4).

5. Dispositif selon la revendication 1, **caractérisé en ce qu'**un seul ressort (14) est prévu pour s'appuyer à un point fixe ou au système de pivotement (15) de la mâchoire de maintien (4) et pour exercer une pression contre la pièce de maintien (9) dans la zone de la mâchoire de maintien (4) , en quoi le palier au niveau de la pièce de maintien (9) est prévu de telle sorte qu'il est possible de déplacer ou d'articuler la pièce de maintien (9) relativement face à la mâchoire de maintien (4).

6. Dispositif selon la revendication 1, **caractérisé en ce que** la pièce de maintien (9) est logée de manière à être orientable et **en ce que** la surface à l'état tourné entraîne une fixation du récipient avec la surface de la mâchoire de maintien (4).

7. Dispositif selon la revendication 1, **caractérisé en ce que** l'axe de pivotement (15) de la mâchoire de maintien (4) est prévu en bas et **en ce que** l'axe de pivotement de la pièce se trouve dans la moitié supérieure de la mâchoire de maintien (4).

8. Dispositif selon la revendication 1, **caractérisé en ce que** la pièce de maintien (9) présente sur le côté des tenons de guidage (18) en saillie, lesquels sont insérés de manière à pouvoir être déplacés dans des courbes directrices (16) prévues au moins des deux côtés dans les parois latérales (11, 12) de la mâchoire de maintien (4) ou insérées.

9. Dispositif selon la revendication 8, **caractérisé en ce que** les courbes directrices (16) sont des sections d'arcade décrivant un rayon fictif autour d'un axe de pivotement fictif (17) avec espacement par rapport à l'axe de pivotement (15) de la mâchoire de maintien (4).

10. Dispositif selon la revendication 9, **caractérisé en ce que** deux courbes directrices (16) sont installées parallèlement dans les parois latérales, courbes directrices dans lesquelles intervient respectivement un tenon de guidage (18) au niveau de la pièce de maintien (9).

11. Dispositif selon la revendication 1, **caractérisé en ce que** la profondeur de la mâchoire de maintien (4) et la profondeur des pièces de maintien sont dimensionnées de telles sorte qu'il est possible d'insérer des récipients avec un diamètre d'env. 50 mm à env. 85 mm.

12. Dispositif selon la revendication 1, **caractérisé en ce que** la pièce de maintien (9) est logée sur un seul côté de la mâchoire de maintien (4).

13. Dispositif selon une des revendications précédentes, **caractérisé en ce que** le corps récepteur (1) est conçu en substance avec une section transversale ronde, rectangulaire ou polygonale, **en ce que** les mâchoires de maintien (4) sont installées et réparties sur une voie circonférentielle et **en ce que** des percées sont placées en cas d'apposition côté extérieur des mâchoires de maintien (4) dans la paroi d'enveloppe, percées à travers lesquelles les mâchoires de maintien (4) s'orientent dans l'intérieur du corps récepteur (1).

14. Dispositif selon la revendication 13, **caractérisé en ce qu'**au moins trois mâchoires de maintien (4) sont apposées et réparties sur une voie circonférentielle de l'enveloppe en cas de conception en forme de cercle de la section transversale du corps récepteur (1).
